(19) Europäisches Patentamt
European Patent Office
Office européen des brevets

(11) **EP 1 855 139 B1**

(12) **EUROPEAN PATENT SPECIFICATION**

(45) Date of publication and mention
of the grant of the patent:
**03.03.2010 Bulletin 2010/09**

(51) Int Cl.:
*G02B 21/00* *(2006.01)* *G02B 23/24* *(2006.01)*

(21) Application number: **07009336.4**

(22) Date of filing: **09.05.2007**

(54) **Confocal image signal obtaining method and apparatus, and sampling operation state obtaining apparatus**

Verfahren und Vorrichtung zum Erfassen von Signalen konfokaler Bilder und Vorrichtung zum Erfassen des Standes der Probenahme

Système et appareil pour obtenir un signal d'image confocal, et appareil pour obtenir l'état de l'opération d'échantillonnage

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.05.2006 JP 2006133516**

(43) Date of publication of application:
**14.11.2007 Bulletin 2007/46**

(73) Proprietor: **Fujinon Corporation**
**Kita-ku**
**Saitama-shi**
**Saitama-ken (JP)**

(72) Inventor: **Fujita, Hiroshi**
**Saitama-shi**
**Saitama-ken (JP)**

(74) Representative: **Klunker . Schmitt-Nilson . Hirsch**
**Patentanwälte**
**Destouchesstrasse 68**
**80796 München (DE)**

(56) References cited:
**EP-A- 1 580 586     EP-A- 1 596 238**

- GMITRO A F ET AL: "CONFOCAL MICROSCOPY THROUGH A FIBER-OPTIC IMAGING BUNDLE" OPTICS LETTERS, OSA, OPTICAL SOCIETY OF AMERICA, WASHINGTON, DC, US, vol. 18, no. 8, 15 April 1993 (1993-04-15), pages 565-567, XP000364196 ISSN: 0146-9592
- KNITTEL J ET AL: "Endoscope-compatible confocal microscope using a gradient index-lens system" OPTICS COMMUNICATIONS, NORTH-HOLLAND PUBLISHING CO. AMSTERDAM, NL, vol. 188, no. 5-6, 15 February 2001 (2001-02-15), pages 267-273, XP004317426 ISSN: 0030-4018

**Description**

BACKGROUND OF THE INVENTION

Field of the Invention

The present invention relates to a confocal image signal obtaining method and apparatus for obtaining an image signal representing a plane region constituted by each point area in a test sample by passing scanning light through each optical fiber of a fiber bundle. The present invention also relates to a sampling operation state obtaining apparatus for use with the implementation of the confocal image signal obtaining method.

Description of the Related Art

Confocal observation systems with improved spatial resolution in optical axis directions and orthogonal directions to the optical axis through the use of confocal optical systems are known.

One of the known systems, for example, employs a method in which scanning light of laser light emitted from a light source is guided or coupled to one of the multitudes of optical fibers forming a fiber bundle and scanning light outputted from an end of the optical fiber is irradiated on a point of a test sample, then test sample light emitted from the point of the test sample by receiving the scanning light (e.g., reflected light of the scanning light, fluorescent light generated by the excitation of the scanning light, or the like) is inputted to the end of the optical fiber, and the test sample light outputted from the optical fiber is detected.

The scanning light outputted from the end of the optical fiber is focused on the point area of the test sample through an objective lens, and the test sample light emitted from the point area of the test sample is focused on the end of the optical fiber through the objective lens. That is, the end of the optical fiber is placed in confocal relation with the point area of the test sample, and the test sample light emitted from the point area is detected by propagating through the optical path through which the scanning light irradiated on the point area has passed, in the opposite direction.

Here, detection by the scanning light through a single optical fiber allows observation of only a single point area of the test sample. Accordingly, by sequentially coupling the scanning light to each of, for example, 100 rows × 100 columns of optical fibers arranged at an end face of a fiber bundle to focus the scanning light on each of 100 rows × 100 columns of point areas of the test sample, and sequentially detecting test sample light generated from each of the point areas by a photomultiplier tube or the like after passed through each of the optical fibers, an image representing a plane region constituted by 100 rows × 100 columns of point areas may be obtained.

For example, a method for inputting the scanning light to each of 100 rows × 100 columns using a first galvanomirror for scanning the scanning light in the row direction, and a second galvanomirror for scanning the scanning light in the column direction is known as described for example, in Japanese Unexamined Patent Publication No. 2005-275125. In the method, the test sample light is detected in synchronization with a sampling signal sequentially outputted according to the operational state of the two galvanomirrors.

Another method that allows the observation of the image in real time is also known as described, for example, in Japanese Unexamined Paten Publication No. 10(1998)-311949, in which a combination of galvanomirror and resonant scanner is used to realize faster scanning of the scanning light to each of 100 rows × 100 columns of optical fibers. Also in this method, the test sample light is detected in synchronization with a sampling signal sequentially outputted according to the operational state of the galvanomirror and resonant scanner, as in the scanning by the combination of two galvanomirrors described above. That is, the detection is performed by presetting that the sampling signal is outputted when the scanning light is sequentially inputted to each of the optical fibers arranged in 100 rows × 100 columns on an end face of a fiber bundle and is ready for detection.

Detection values obtained by detecting the test sample light are stored, each cross-related to the location of the point area of the test sample from which the test sample light is emitted. The location of point area corresponds to the location of optical fiber through which the test sample light emitted from the point area is passed. By combining the detection value of test sample light obtained for each optical fiber, constituting a fiber bundle, with information indicating the location of the point area from which the test sample light is emitted, image signals representing a plane region of 100 rows × 100 columns in a test sample, to which the scanning light is irradiated, are obtained.

In the mean time, in a method using the scanning optical system described above, the timing of outputting the sampling signal in accordance with the operational state of the galvanomirror and resonant scanner, and a scanning position of the scanning light within the end face of the fiber bundle in the operational state described above are not fully in repetition repeatable relation. Every time the scanning of the scanning light on the fiber bundle is repeated, the relationship between the timing and scanning position described above varies slightly.

For this reason, even if the scanning light may locate in the central portion of the optical fiber when the sampling signal corresponding to a predetermined operational state of the scanning optical system is outputted in the first scanning of the scanning light to the fiber bundle, the scanning light may locate, in the second scanning, in the peripheral portion of the optical fiber when the sampling signal corresponding to the operational state of the scanning optical system corresponding to the operational state of the scanning optical system in the first scanning is outputted.

If that is the case, the amount of scanning light inputted to optical fibers varies from fiber to fiber when detecting test sample light in synchronization with the sampling signal, thereby difference is developed in intensity between the scanning light irradiated on the respective point areas. Consequently, when the image representing the plane region is displayed using image signals obtained by detecting test sample light for the respective optical fibers, density irregularities are developed. Further, if the plane region is observed as a motion image, the density irregularities vary with time.

For this reason, there is a demand that the difference in intensity between scanning light irradiated on the respective point areas be reduced, and thereby an image, with minimized density irregularities, representing the plane region of the test sample be obtained.

In reference EP 1 580 586 AI a scanning confocal microscope is disclosed wherein a scanning mirror device formed of a plurality of mirrors is disposed a the position of an intermediate image.

SUMMARY OF THE INVENTION

The present invention has been developed in view of the circumstances described above, and it is an object of the present invention to provide a confocal image signal obtaining method and apparatus capable of obtaining a higher quality image signal, and to provide a sampling operation state obtaining apparatus for use with the implementation of the confocal image signal obtaining method.

The confocal image signal obtaining method of the present invention is a method for obtaining an image signal representing a plane region constituted by a point area within a test sample by sequentially coupling scanning light to an end of each of a multitude of single optical fibers constituting a fiber bundle and focusing scanning light outputted from the other end of the optical fiber on the point area which is in confocal relation with the other end of the optical fiber, and inputting test sample light emitted from the point area from the other end to pass through the optical fiber, and detecting in synchronization with a sampling signal sequentially outputted according to an operational state for scanning the scanning light. Here, the method includes the steps of: outputting the sampling signal a plurality of times while the scanning light is coupled to one of the multitude of single optical fibers and scans on the end (Ta) of the single optical fiber; obtaining an operational state corresponding to a sampling signal at which a maximum value of the test sample light is detected among the sampling signals outputted the plurality of times while the scanning light is coupled to each of the multitude of single optical fibers through statistical processing on multitudes of detection values obtained for each of the multitude of single optical fibers by detecting the test sample light in synchronization with the sampling signals when scanning of the scanning light to each of a multitude of single optical fibers is performed a plurality of times; and obtaining the image signal by performing the detection under the obtained operational state.

The sampling operation state obtaining apparatus for use with the implementation of the confocal image obtaining method of the present invention is an apparatus for use with a confocal image obtaining method for obtaining an image signal representing a plane region constituted by a point area within a test sample by sequentially coupling scanning light to an end of each of a multitude of single optical fibers constituting a fiber bundle and focusing scanning light outputted from the other end of the optical fiber on the point area which is in confocal relation with the other end of the optical fiber, and inputting test sample light emitted from the point area from the other end to pass through the optical fiber, and detecting in synchronization with a sampling signal sequentially outputted according to an operational state for scanning the scanning light. The apparatus includes: a signal output means that is adapted to output the sampling signal a plurality of times while the scanning light is coupled to one of the multitude of single optical fibers and scans on the end (Ta) of the single optical fiber; and an operational state obtaining means that is adapted to obtain an operational state corresponding to a sampling signal at which a maximum value of the test sample light is detected among the sampling signals outputted the plurality of times while the scanning light is coupled to each of the multitude of single optical fibers through statistical processing on multitudes of detection values obtained for each of the multitude of single optical fibers by detecting the test sample light in synchronization with the sampling signals when scanning of the scanning light to each of the multitude of single optical fibers is performed a plurality of times.

The confocal image obtaining apparatus of the present invention comprises a sampling operation state obtaining apparatus as described above and further a control means for causing the detection to be performed under the obtained operational state.

The statistical processing may be a principal component analysis. The statistical processing, however, is not limited to the principal component analysis, and any method may be used as long as it is capable of obtaining the operational state corresponding to the sampling signal at which a maximum value of the test sample light is detected for each optical fiber through arithmetic operation performed by cross-relating each detection value obtained by each of the plurality times of scanning for each optical fiber.

In the confocal image obtaining method and apparatus, and the sampling operational state obtaining apparatus of the present invention, the sampling signal is outputted a plurality of times while the scanning light is coupled to a single optical fiber, an operational state corresponding to a sampling signal at which a maximum value of the test sample light is detected is obtained among the sampling signals outputted the plurality of times while the scanning light is coupled to each optical fiber through statistical processing on multitudes of detection values obtained for each optical fiber by detecting the test sample light in synchronization with the sampling signal when scanning of the scanning light to each optical fiber is performed a plurality of times, and the image signal is obtained by performing the detection under the obtained operational state. This may reduce the difference in light intensity of the scanning light passed through the optical fibers when detecting test sample light between each of the optical fibers, which may reduce the difference in light intensity of the scanning light that irradiates each point area of the test sample, so that a higher quality image signal may be obtained. Thus, an image, with minimized density irregularities, representing the plane region of the test sample may be displayed.

BRIEF DESCRIPTION OF THE DRAWINGS

Figure 1 illustrates a schematic construction of a confocal image observation apparatus and a sampling operation state obtaining apparatus of the present invention.
Figure 2 illustrates the end face of an end of a fiber bundle.
Figure 3 is a cross-sectional view of an end of the fiber bundle, illustrating the scanning positions of sampling light at the end of the fiber bundle when sampling signals are outputted.
Figure 4 illustrates the relationship between scanning position and detection value of test sample light.
Figure 5 is a table illustrating total detection values detected in synchronization with each reference signal P in 50 times of scanning.
Figure 6A illustrates each optical fiber scanned with the scanning light when each sampling signal is outputted.
Figure 6B illustrates detection values, each detected in synchronization with a sampling signal which is outputted a plurality of times while the scanning light is coupled to an optical fiber.
Figure 7 illustrates each of the sampling signals at which a maximum value of test sample light is detected among the sampling signals.

DESCRIPTION OF THE PREFERRED EMBODIMENTS

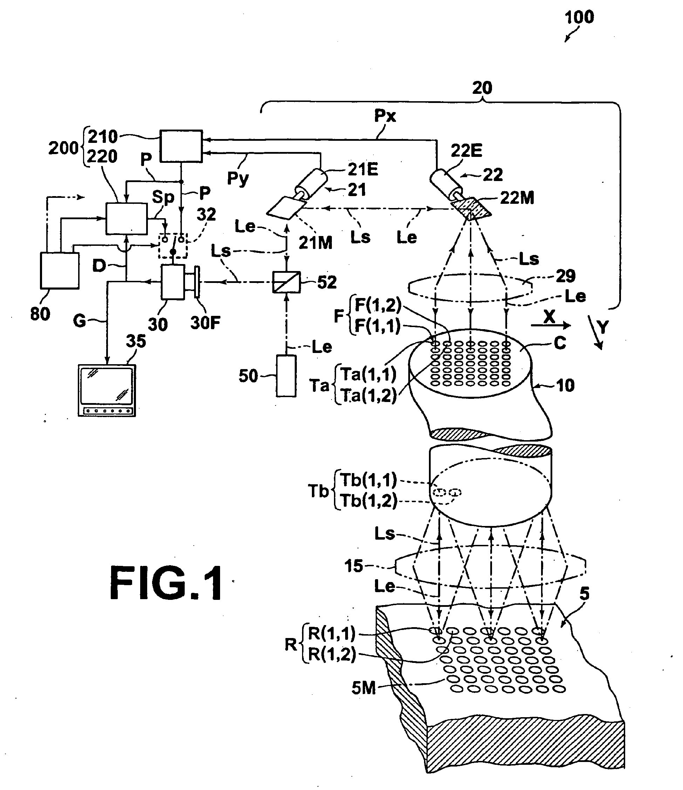

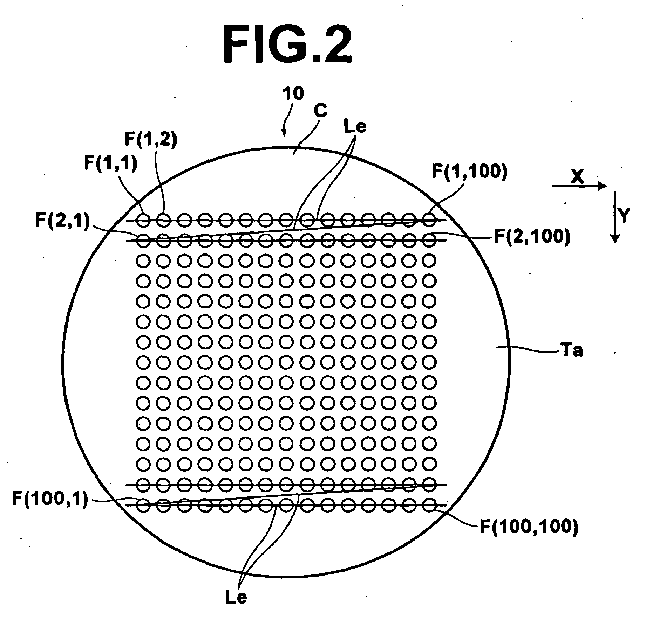

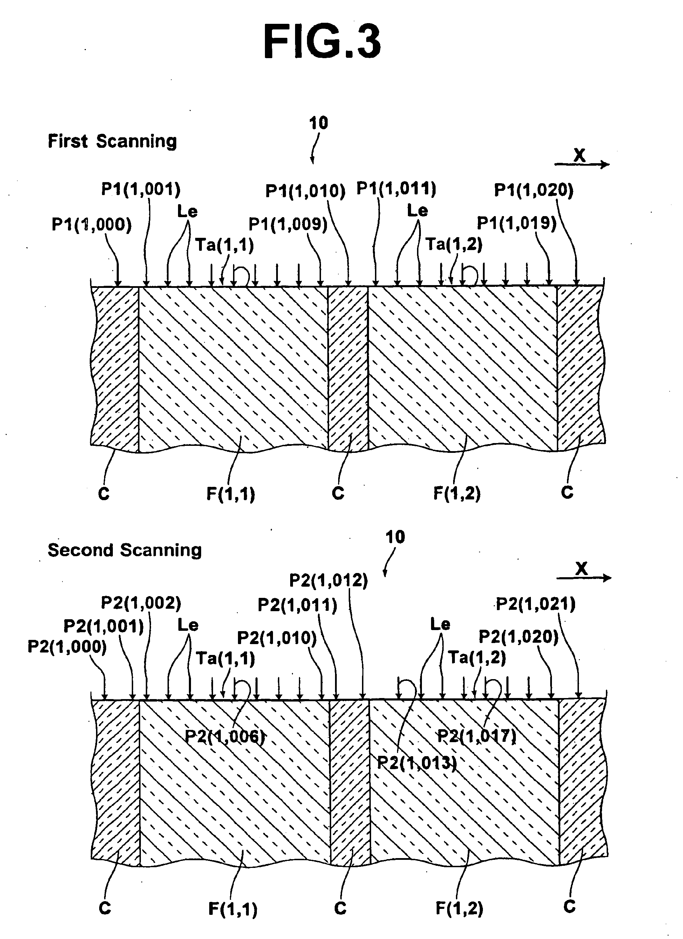

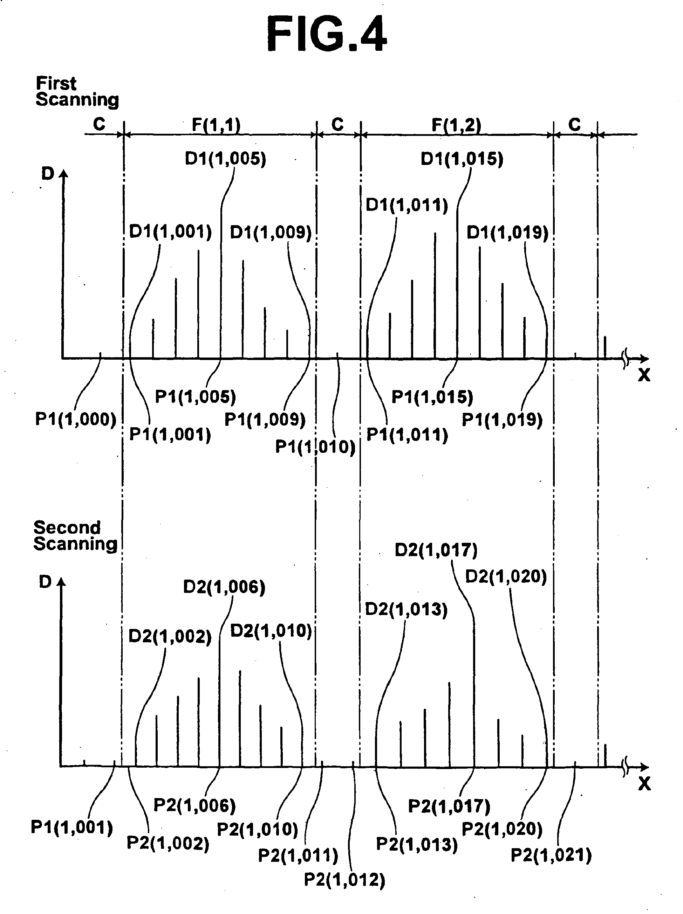

Hereinafter, exemplary embodiments of the present invention will be described with reference to accompanying drawings. Figure 1 illustrates a schematic construction of a confocal image observation apparatus for observing an image by applying a confocal image signal obtaining method of the present invention and a sampling operation state obtaining apparatus for use with the implementation of the confocal image signal obtaining method. Figure 2 illustrates the end face of an end of a fiber bundle. Figure 3 is a cross-sectional view of an end of the fiber bundle, illustrating scanning positions of sampling light when sampling signals are outputted. Figure 4 illustrates the relationship between the scanning location and detection value of test sample light. Note that the sampling operation state obtaining apparatus is incorporated in the confocal image observation apparatus.
The illustrated confocal image observation apparatus 100 sequentially couples scanning light Le to each of ends Ta (1,1), Ta (1,2), ----- of each of optical fibers F(1,1), F(1,2),constituting a fiber bundle 10, and focuses scanning light outputted from each of the other ends Tb (1,1), Tb (1,2), ----- of each of the optical fibers F (1,1), F(1,2), ----- on each of point areas R(1,1), R(1,2), ----- of a test sample 5, which is in confocal relationship with each of the corresponding other ends Tb (1,1), Tb (1,2),through an objective lens 15. Then, the apparatus 100 passes each test sample light Ls (1,1), Ls(1,2), ----- emitted from each of the point areas R(1,1), R(1,2), ----- through optical paths, through which the scanning light Le has passed, in the opposite direction. That is, each test sample light Ls(1,1), Ls(1,2), ----- is inputted from each of the other ends Tb (1,1), Tb (1,2), -----, and passed through each of the optical fibers F(1,1), F(1,2), -----. Further, each test sample light Ls(1,1), Ls(1,2), ----- passed through the optical fibers F(1,1), F(1,2), ----- is detected in a detection section 30 in synchronization with detecting signals Sp(1,1), Sp(1,2), ----- to be described later, which are sampling signals sequentially outputted according to the operational state of a scanning optical system 20 for scanning the scanning light Le, and obtains image signals G(1,1), G(1,12), ----- representing plane region 5M constituted by each of the point areas R(1,1), R(1,2), -----. Thereafter, the apparatus 100 inputs the image signals G (1,1), G(1,12), ----- to a display section 35 to display an image of the plane region 5M represented by the image signals G(1,1), G(1,12), ----- on the display section 35.
Hereinafter, the optical fibers F(1,1), F(1,2), ----- are also collectively referred to as optical fibers F, the ends Ta (1,1), Ta (1,2), ----- are also collectively referred to as ends Ta, and the other ends Tb (1,1), Tb (1,2), ----- are also collectively referred to as other ends Tb. Further, the point areas R(1,1), R(1,2), ----- are also referred to as point areas R. Still further, the detecting signals Sp(1,1), Sp(1,2), ----- are also collectively referred to as detecting signals Sp, and image signals G(1,1), G(1,12), ----- are also collectively referred to as image signals G.

The sampling operation state obtaining unit 200 for use with the implementation of the illustrated confocal image signal obtaining method is an apparatus for obtaining, with respect to each optical fiber, an operational state of the scanning optical system 20 corresponding to the sampling signal at which a maximum value of the test sample light Ls is detected by the detection section 30 among sampling signals outputted a plurality of times while scanning light Le is coupling to each of the optical fibers F. When obtaining operational states of the scanning optical system 20 by the sampling operation state obtaining unit 200, it is preferable that a standard test sample having a constant reflectance with a smooth surface be used as a test sample. But, the obtaining of the operational states of the scanning optical system 20 is not limited to the case where the standard test sample is used, and any type of test sample may be used.

After the operational states are obtained by the sampling operation state obtaining unit 200, detection by the detection section 30 for the test sample 5, which is an observation target obj ect or measuring target obj ect, is performed under the operational state through control of a control section, to be described later, of the confocal image observation apparatus 100. The operational state is obtained in a preparatory stage for observing or measuring the test sample 5 (also referred to as "observation measurement" for short) by the confocal image observation apparatus 100. The obtaining of the operational states means data acquisition for what is known as calibration.

The operational states are obtained when power is supplied to the confocal image observation apparatus 100, prior to performing the observation measurement by the confocal image observation apparatus 100, after the observation measurement is performed for a predetermined time, after the observation measurement is performed a predetermined number of times, or the like.

When the operational states are obtained by the sampling operation state obtaining unit 200, information indicating whether or not an observation measurement may be performed accurately by the confocal image observation apparatus 100 is displayed on the display section 35 through control of the control section 80. Here, the feasibility of observation measurement is determined by the sampling operation state obtaining unit 200, but it is not necessarily limited to this.

If a determination is made by the sampling operation state obtaining unit 200 that the observation measurement is feasible, the operational state obtained at the time is stored in the sampling state obtaining unit 200, or control section 80. Thereafter, the standard test sample is removed, and an observation measurement of the test sample 5 is performed by the confocal image observation apparatus 100 under the stored operational state.

If a determination is made by the sampling state obtaining unit 200 that the observation measurement is not feasible, the obtaining of the operational states and determination of observation measurement feasibility are performed again by the sampling state obtaining unit 200, after an adjustment or the like is made to the confocal image observation apparatus 100.

If the confocal image observation apparatus 100 is, for example, an endoscope apparatus, the test sample 5 is tissue inside of a living body and a tissue property observation measurement is performed.

Further, an arrangement may be made in which a prompt message whether or not the obtaining of the operational state and determination of observation measurement feasibility are performed is displayed on the display section 35 to allow the operator to decide whether or not to perform the obtaining of the operational states and determination of observation measurement feasibility when power is supplied to the confocal image observation apparatus 100, prior to performing the observation measurement by the confocal image observation apparatus 100, after the observation measurement is performed for a predetermined time, or after the observation measurement is performed a predetermined number of times.

The sampling state obtaining unit 200 includes: a signal output section 210 that outputs a reference signal P, which is a sampling signal sequentially outputted according the operational state of the scanning optical system 20 to scan the scanning light Le, a plurality of times while the scanning light Le is coupled to a single optical fiber; an operational state obtaining section 220 that obtains, for each of the optical fibers F, the operational state of the scanning optical system 20 corresponding to each of the detecting signals Sp, which is a reference signal at which a maximum value of the test sample light Ls is detected among the reference signals P outputted a plurality of times while the scanning light is coupled to a single optical fiber, i.e., while the test sample light Ls is detectable through the optical fiber, based on statistical processing of multitudes of detection values D obtained, for each of the optical fibers F, by the detection of the test sample light Ls in synchronization with the reference signal D when scanning of the scanning light Le to each of the optical fibers F is performed a plurality of times.

The operational state obtaining section 220 outputs each of the detecting signal Sp(1,1), Sp(1,2), ----- corresponding to the reference signal at which a maximum value of the test sample light Ls is detected for each of the optical fibers F(1,1), F(1,2),based on the reference signal P inputted from the signal output section 210. As will be described later, the detecting signals Sp(1,1), Sp (1,2), ----- are cross-related to the operational states of the scanning optical system 20. The reference signals P are also cross-related to the operational states of the scanning optical system 20.

The confocal image observation apparatus 100 obtains image signals G by performing the detection under the operational states of the scanning optical system 20 corresponding to the detecting signals Sp(1,1), Sp(1,2), -----, at which a maximum value of the test sample light Ls is detected, obtained by the sampling state obtaining unit 200 for each of the optical fibers F.

As described above, each of the detecting signals Sp, which is a sampling signal for obtaining the image signal, is selected from the reference signals P cross-related to the operational states of the scanning optical system 20, and the operational state of the scanning optical system 20 corresponding to each of the detecting signals Sp is obtained by the operational state obtaining section 220.

The scanning optical system 20 includes: a galvanomirror 21 that scans scanning light Le outputted from a laser source 50 in the sub-scanning direction (arrow Y direction in the drawings); a resonant scanner 22 that scans the scanning light Le in the main scanning direction (arrow x direction in the drawings); and an fθ lens 29.

The galvanomirror 21 includes an encoder 21E that sequentially outputs a sub-scanning signal Py which is cross-related to the operational state of the galvanomirror 21. The resonant scanner 22 includes an encoder 22E that sequentially outputs a main scanning signal Px which is cross-related to the operational state of the resonant scanner 22.

The scanning light Le is scanned in the sub-scanning direction by a reciprocal turning movement of a reflection mirror surface 21M of the galvanomirror 21. The scanning light Le scanned in the sub-scanning direction is scanned in the main scanning direction by a reciprocal turning movement of a reflection mirror surface 22M of the resonant scanner 22.

The signal output section 210 receives a sub-scanning signal Py sequentially outputted from the encoder 21E of the galvanomirror 21 at every certain fixed angles according to the turning movement of the reflection mirror surface 21M, and the main scanning signal Px sequentially outputted from the encoder 22E of the resonant scanner 22 at every creation fixed angles according to the turning movement of the reflection mirror surface 22M, and combines them to output as a reference signal P(x,y).

The scanning light Le is scanned in the sub-scanning and main scanning directions on the side of the ends Ta of the fiber bundle 10 through the fθ lens 29. The sub-scanning signal Py is outputted every time the scanning light Le is deflected by substantially equal angles by the galvanomirror 21, and the main scanning signal px is outputted every time the scanning light Le is deflected by substantially equal angles by the resonant scanner 22. Thus, the reference signal P(x,y) is outputted every time the scanning light Le, transmitted through the fθ lens 29, is moved by substantially an equal distance in the main scanning direction on the fiber bundle 10. Here, the fθ lens 29 converts the equiangular deflection of the scanning light Le by the scanning optical system 20 to equidistant movement of the scanning light on the ends Ta.

The confocal image observation apparatus 100 includes the fiber bundle 10, objective lens 15, scanning optical system 20, detection section 30, laser source 50, display section 35, and sampling state obtaining unit 200. The apparatus 100 further includes: a deflection beam splitter 52 that reflects and guides test sample light Ls to the detection section 30, as will be described later; a synchronization signal switching section 32 that switches between the detection by the detection section 30 in synchronization with the reference signal P outputted from the signal output section 210, and the detection by the detection section 30 in synchronization with the detecting signals Sp outputted from the operational state obtaining section 220; and the control section 80 that controls the overall operation of the confocal image observation apparatus 100, each operation timing, and the like.

Hereinafter, an operation of the confocal image observation apparatus 100 will be described in more detail.

Scanning light Le, which is laser light outputted from the laser source 50, is inputted to the reflection mirror surface 21M of the galvanomirror 21 through the deflection beam splitter 52.

The scanning light Le is reflected at the reflection mirror surface 21M and the reflection mirror surface 22M, which are turning reciprocally, and further scanned to the side of the ends Ta of the fiber bundle 10 through the fθ lens 29.

By the main scanning and sub-scanning, the scanning light inputted to each of the optical fibers F from each of the ends Ta is outputted from each of the other ends Tb, and focused on each of the point areas R of the test sample 5 through the objective lens 15.

Here, from the point areas R within the test sample 5 that received the scanning light Le, test sample light Ls that includes reflection light of the scanning light Le, fluorescent light excited by receiving the scanning light Le, or the like, is emitted.

Then, the test sample light Ls emitted from the point areas R propagates through the optical paths of the scanning light Le in the opposite direction.

That is, the test sample light Ls is inputted to each of the other ends Tb of each of the optical fibers F through the objective lens 15, passed through the optical fiber, and outputted from each of the ends Ta. Further, the test sample light Ls outputted from each of the ends Ta of each of the optical fibers F is passed through the fθ lens 29, and inputted to the deflection beam splitter 52 by reflecting at the reflection mirror face 22M of the resonant scanner 22 and reflection mirror face 21M of the galvanomirror 21.

The test sample light Ls inputted to the deflection beam splitter 52 is inputted to the detection section 30 by reflecting at the deflection beam splitter 52 and detected by the detection section 30.

Here, the test sample light Ls is passed through a detection filter 30F of the detection section, thereby only an optical component in a desired wavelength region is extracted and detected.

The detection described above is performed in synchronization with the detecting signals Sp outputted from the operational state obtaining section 220.

The image signals G representing a plane region 5M constituted by each of the point areas R within the test sample 5 detected by the detection section 30 are inputted to the display section 35, where an image representing the plane region 5M is displayed.

An operation of the sampling state obtaining unit 200 will now be described.

The signal output section 210 sequentially outputs a reference signal P (x, y) corresponding to the operational state of the scanning optical system 20, i.e., corresponding to the scanning position of the scanning light Le scanned on the side of the ends Ta of the fiber bundle 10.

Here, it is assumed that 100 rows × 100 columns of optical fibers F are disposed on the ends Ta of the fiber bundle 10, as illustrated in Figure 2. The first row of the 100 rows × 100 columns includes optical fibers F(1,1), F(1,2), ----- F(1,100). The second row includes optical fibers F(2,1), F(2,2), ----- F(2,100), and 100th row includes optical fibers F(100,1), F(100,2), ----- F(100,100).

The fiber bundle 10 includes a core section constituted by each of the optical fibers F, and a clad section C which is the section within the fiber bundle 10 other than the optical fiber section, as illustrated in Figure 2.

While optical fibers F(1,1), F(1,2), ----- F(1,100) corresponding to the first row of the 100 rows × 100 columns of optical fibers are scanned, the signal output section 210 outputs reference signals P (1,000) to P (1,999), which are cross-related to operational states of the scanning optical system for scanning the scanning light Le, and thereafter, outputs reference signal P(100,000) to P (100, 999) while optical fibers F(100, 1) to F(100, 100) corresponding to 100th row are scanned.

More specifically, in the first scanning of the scanning light Le to each of the optical fibers F constituting the fiber bundle 10, the signal output section 210 sequentially outputs a plurality of reference signals P1(1,001) to P1(1,009) cross-related to the operational states of the scanning optical system 20, while the scanning light Le is coupled to the single optical fiber F(1,1) as illustrated in Figure 3. Hereinafter, the reference signal in nth scanning is referred to as Pn.

Then, signal output section 210 sequentially outputs a plurality of reference signals P2(1,011) to P2(1,019) while the scanning light Le is coupled to the optical fiber F(1,2). Further, it sequentially outputs a plurality of reference signals P100 (100, 991) to P100 (100, 999) while the scanning light Le is coupled to the optical fiber F(100,100), not shown in the drawing.

In the first scanning, the reference signal P1(1,010) outputted at the time between the time period when the scanning light is coupled to the optical fiber F (1,1) and the time period when the scanning light is coupled to the optical fiber F(1,2) is a signal outputted when the scanning light Le is not coupled to any of the optical fibers. That is, the reference signal P1(1,010) is a signal outputted when the scanning light is irradiated on a position within the clad section C. Likewise, the reference signals P1(1,000) and P1(1,020) are signals outputted when the scanning light Le is not coupled to any of the optical fibers, i.e., the position irradiated by the scanning light Le is located within the clad section C.

In the mean time, in the second scanning of the scanning light Le to each of the optical fibers F, the correspondence relationship between the output timing of the reference signal cross-related to the operational state of the scanning optical system 20 and scanning position of the scanning light Le under the operational state described above varies. For example, a plurality of reference signals P2(1,002) to P2(1,010) is outputted while the scanning light is coupled to the optical fiber F(1,1), and a plurality of reference signals P2 (1,013) to P2 (1, 020) is outputted while the scanning light is coupled to the optical fiber F(1,2).

Through detection of the test sample light Ls performed in synchronization with each reference signal P when the scanning of the scanning light Le to each of the optical fibers F(1,1), F(1,2), ----- is performed a plurality of times, for example, 50 times in the manner as described above, multitudes of detection values are obtained for each of the optical fibers F.

More specifically, multitudes of detection values are obtained in the following manner. While the scanning light Le is scanned to the optical fibers F(1,1) to F(100,100) in the first scanning in 50 times of scanning, reference signals P1(1,000) to P1(100,999) are outputted. While the scanning light Le is scanned onto the optical fibers F (1,1) to F(100,100) in the second scanning, reference signals P2 (1, 000) to P2 (100, 999) are outputted, and while the scanning light Le is scanned to the optical fibers F(1,1) to F(100,100) in the 50th scanning, reference signals P50 (1,000) to P1 (100, 999) are outputted. Here, in the 50 times of scanning of the scanning light Le to each of the optical fibers F, test sample light Ls is detected in synchronization with the reference signals P1(1,000) to P50 (100,999), and detection values obtained thereby are inputted to the operational state obtaining section 220.

For example, in the first scanning of the scanning light Le to the optical fiber F(1,1), detection values D1 (1,001) to D1 (1, 009) obtained by detecting the test sample light Ls in synchronization with the reference signals P1(1,001) to P1(1,009) are inputted to the operational state obtaining section 220, and in the first scanning of the scanning light Le to the optical fiber F(1,2), detection values D1(1,011) to D1(1,019) obtained by detecting the test sample light Ls in synchronization with the reference signals P1(1,011) to P1(1,019) are inputted to the operational state obtaining section 220, as illustrated in Figure 4. Hereinafter, a detection value detected in the nth scanning is referred to as detection value Dn.

In the second scanning of the scanning light Le to the optical fiber F(1,1), detection values D2(1,002) to D2 (1,010) obtained by detecting the test sample light Ls in synchronization with the reference signals P2(1,002) to P1 (1,010) are inputted to the operational state obtaining section 220, and in the second scanning of the scanning light Le to the optical fiber F(1,2), detection values D2 (1, 013) to D1(1,020) obtained by detecting the test sample light Ls in synchronization with the reference signals P2(1,013) to P1(1,020) are inputted to the operational state obtaining section 220.

The scanning of the scanning light Le to each of the optical fibers F is performed 50 times in the manner as described above, in which detection values D1(1,000) to D1(100,999) obtained by detecting the test sample light Ls in synchronization with the reference signals P1 (1,000) to P1(100,999) are inputted to the operational state obtaining section 220, and thereafter, in the final 50th scanning, detection values D50 (1,000) to D50(100,999) obtained by detecting the test sample light Ls in synchronization with the reference signals P50(1,000) to P50(100,999)are inputted to the operational state obtaining section 220.

Here, the operational state obtaining section 220 cross-relates each of the detection values D1 (1, 000) to D50 (100, 999) with each of the corresponding reference signals P1 (1,000) to P50(100,999).

Then, the operational state obtaining section 220 performs statistical processing on the multitudes of detection values D obtained for each of the optical fibers F(1,1), F(1,2), ----- by detecting the test sample light Ls in synchronization with the reference signals P1(1,000) to P50(100, 999). Through the statistical processing, the operational state obtaining section 220 obtains the operational state of the scanning optical system 20 according to each of detecting signals Sp (1,1), Sp(1,2),corresponding to each of the reference signals at which a maximum value of the test sample light Ls is detected for each of the optical fibers F(1,1), F(1,2), -----.

In the example shown in Figure 4, for the optical fiber F(1,1), in the first scanning of the scanning light Le to the optical fiber F(1,1) in the 50 times of scanning, the reference signals outputted a plurality of times while the scanning light Le is coupled to the optical fiber F(1,1) are the reference signals P1 (1,001) to P1 (1,009). Of these reference signals P1(1,001) to P1(1,009), the reference signal at which a maximum value of the test sample light Ls is detected, D1(1,005), is the reference signal P1(1,005).

In the second scanning, the reference signals outputted a plurality of times while the scanning light Le is coupled to the optical fiber F(1,1) are the reference signals P2 (1,002) to P1 (1,011). Of these reference signals P2(1,002) to P1 (1,011), the reference signal at which a maximum value of the test sample light Ls is detected, D2(1,006), is the reference signal P2(1,006).

For the optical fiber F(1,2), in the first scanning of the scanning light Le to the optical fiber F(1,2) in the 50 times of scanning, the reference signal at which a maximum value of the test sample light Ls is detected, D1(2,015), is the reference signal P1(2,015). In the second scanning, the reference signal at which a maximum value of the test sample light Ls is detected, D2 (2,017), is the reference signal P2 (2,017).

As described above, of the reference signals outputted a plurality of times while the scanning light Le is coupled to a particular optical fiber, the reference signal P, at which a maximum value of the test sample light Ls is detected, differs for each scanning.

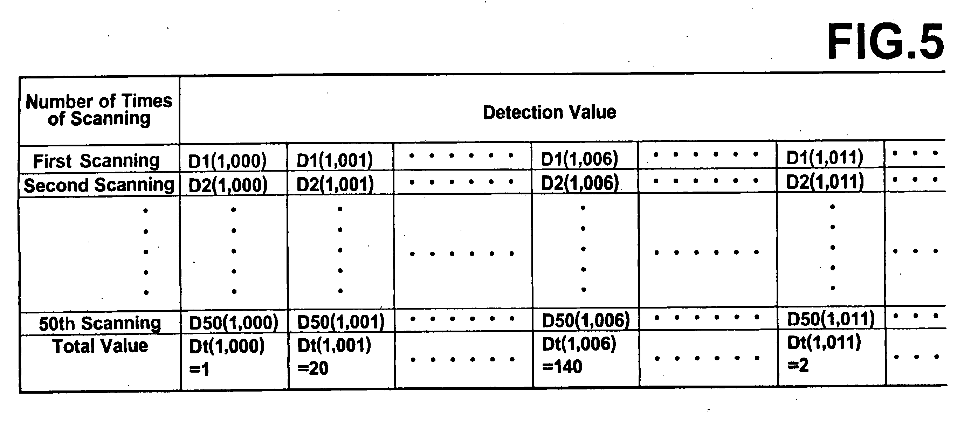

Next, a specific method of the statistical processing will be described. Figure 5 is a table illustrating total detection values detected in synchronization with each reference signal P in 50 times of scanning.

First, a method for obtaining a detecting signal Sp(1,1) corresponding to a reference signal at which a maximum value of the test sample light Ls is detected for optical fiber F(1,1) will be described.

In the first scanning, the reference signals outputted a plurality of times while the scanning light Le is coupled to the optical fiber F(1,1) are reference signals P1(1,001) to P1(1,009), and detection values obtained by detecting the test sample light Ls in synchronization with these reference signals are D1(1,001) to D1(1,009).

In the second scanning, the reference signals outputted a plurality of times while the scanning light Le is coupled to the optical fiber F(1,1) are reference signals P2(1,002) to P1(1,011), and detection values obtained by detecting the test sample light Ls in synchronization with these reference signals are D2(1,002) to D2 (1,011) .

Detection values obtained in 50 times of scanning in the same manner as described above are like those illustrated in Figure 5.

Here, when reference signals P1(1,001), P2(1,001),P50(1,001) which belong to the reference signal P(1,001) corresponding to the operational states of the scanning optical system 20 are outputted, the detection values detected through the optical fiber F(1,1) are detection values D1(1,001), D2(1,001), -----, D50(1,001), and the total of these values is a total value Dt(1,001). Here, Dt(1,001) is equal to 20.

Total values of the detection values detected through the optical fiber F(1,1) when the reference signals are outputted according to other operational states of the scanning optical system 20 that differ from the operational state described above may also be obtained. For example, for reference signal P(1,000), total value Dt(1,000) is equal to 1.

Likewise, total value Dt(1,002) = 50, toal value Dt(1,003) = 65, total value Dt (1,004) = 70, total value Dt(1,005) = 80, total value Dt(1,006) = 140, total value Dt(1,007) = 75, total value Dt(1,008) = 40, total value Dt(1,009) = 15, total value Dt(1,010) = 5, and total value Dt(1,011) = 2.

From the result described above, of the reference signals outputted while the scanning light Le is coupled to the optical fiber F(1,1), the reference signal at which a maximum value of the test sample light Ls is obtained is the reference signal P(1,006) corresponding to the total value Dt (1,006), which is equal to 140.

The operational state corresponding to the reference signal P(1,006) is the state in which a sub-scanning signal Py(1) is outputted from the encoder 21E of the galvanomirror 21 constituting the scanning optical system 20, and a main scanning signal Px (006) is outputted from the encoder 22E of the resonant scanner 22 constituting the scanning optical system 20.

Under the operational state obtained by the operational state obtaining section 220, i.e., a state in which the sub-scanning signal Py(1) is outputted from the encoder 21E of the galvanomirror 21, and the main scanning signal Px (006) is outputted from the encoder 22E of the resonant scanner 22 according to the reference signal P(1,006), an image signal G(1,1) is obtained. That is, the image signal G(1,1) is obtained by the detection section 30 by performing the detection in synchronization with the output of the detecting signal Sp(1,1) corresponding to the reference signal P(1,006) outputted from the operational state obtaining section 220.

Here, by performing the detection in synchronization with the reference signal P(1,006), i.e., the output of the detecting signal Sp(1,1), a maximum value of the test sample light may be detected while the scanning light Le is coupled to the optical fiber F(1,1).

Likewise, for each of the other optical fibers, each of the detecting signals Sp, which is a reference signal at which a maximum signal of the test sample light Ls is detected, may be obtained from the reference signals P, and each of the detecting signals Sp (1,1) to Sp(100,100), at which a maximum value of the test sample light Le is detected, is obtained for each optical fiber.

Then, for each of the optical fibers F(1,1) to F(100,100), by performing detection of test sample light Ls under the operational state of the scanning optical system 20 corresponding to each of the detecting light Sp (1,1) to Sp (100,100), i.e., in synchronization with the output of each of the detecting light Sp (1, 1) to Sp (100,100) which is a reference signal selected from the reference signals P received from the signal output section 210 and outputted from the operational state obtaining section 220, image signals G(1,1) to G(100,100) are obtained.

More specifically, when performing the detection in synchronization with the detecting signal Sp(1,1) to Sp (100,100), the operational state obtaining section 220 outputs detecting signals Sp (1,1) to Sp (100,100) corresponding to the operational states obtained in the manner as described above from among the reference signals P(1,000) to P (100,999) received from the signal output section 210. Here, by the control of the switching section 32 of the control section 80, the output of the reference signals P generated in the signal output section 210 to the detection section 30 is cutoff, and the detecting signals Sp generated in the operational state obtaining section 220 are inputted to the detection section 30. In the detection section 30, the detection of the test sample light Ls is performed in synchronization with the detecting signals Sp.

The method of the statistical processing described above is a method in which reference signal P at which a maximum value of test sample light Ls is detected is obtained for each optical fiber separately. But, a principal component analysis may be used as a statistical processing method for obtaining each of the detecting signals Sp, at which a maximum signal is detected, for each optical fiber at the same time.

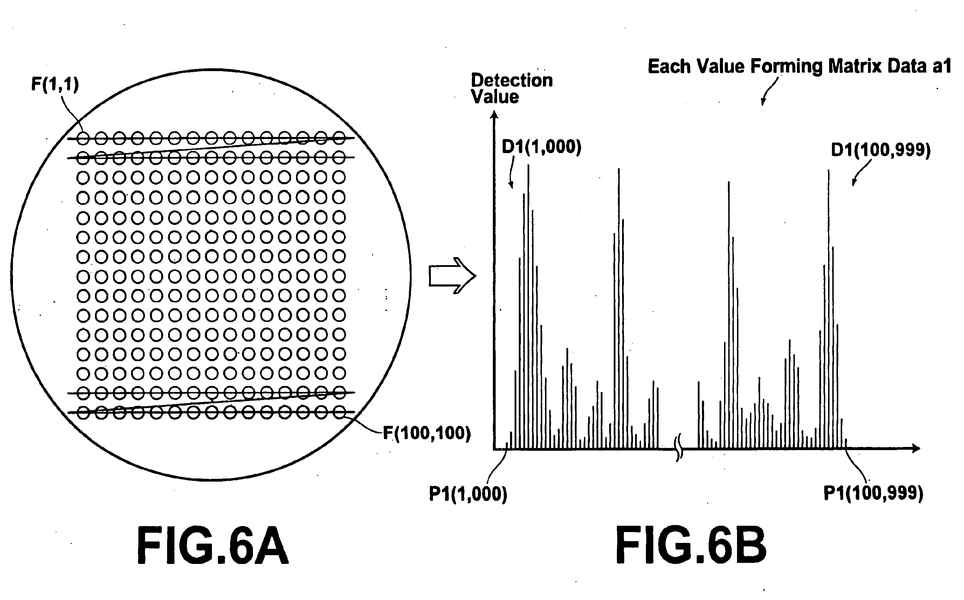

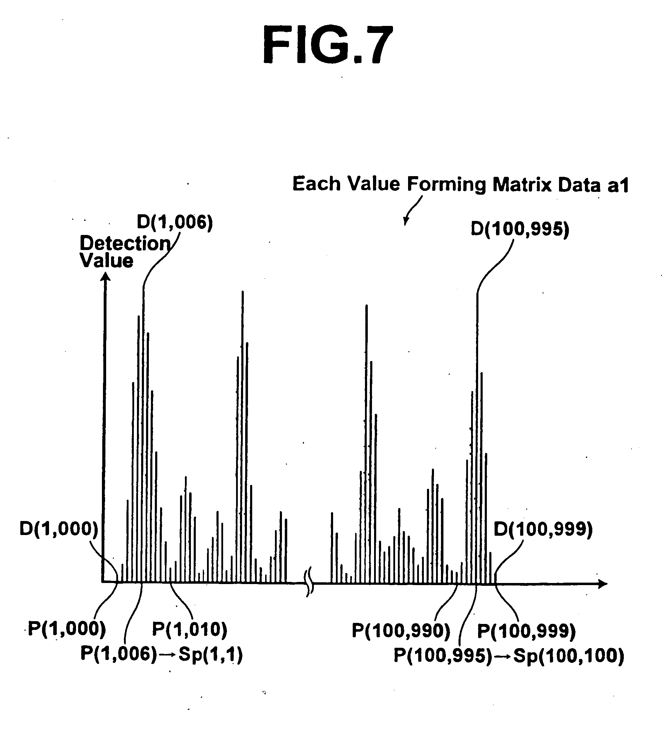

Figure 6A illustrates each optical fiber scanned with scanning light when each reference signal is outputted. Figure 6B illustrates detection values detected in synchronization with reference signals outputted a plurality of times while the scanning light is coupled to each of the optical fibers. Figure 7 illustrates each of the detecting signals, which is a reference signal at which a maximum value of the test sample light is detected, while the scanning light is coupled to each of the optical fibers. In Figure 6B, the vertical axis indicates the detection value and horizontal axis indicates the scanning position of the scanning light in time series. In Figure 7 also, the vertical axis indicates the detection value and horizontal axis indicates the scanning position of the scanning light in time series. Hereinafter, the principal component analysis will be described.

As illustrated in Figures 6A and 6B, in the first scanning for $10^4$ optical fibers F(1,1) to F(100,100), $10^5$ detection values D1(1,000) to D1(100,999) obtained in synchronization with $10^5$ reference signals P1(1,000) to P1(100,999) are arranged in a matrix of $10^5$ rows and 1 column, which is referred to as matrix data $a_1$. Here, the reference signal is outputted 10 times for each optical fiber.

$10^5$ detection values D2 (1, 000) to D1 (100, 999) obtained in the second scanning are arranged in a matrix of $10^5$ rows and 1 column, which is referred to as matrix data $a_2$. Thereafter, detection values D50 (1, 000) to D50 (100, 999) obtained in the $50^{th}$ scanning are arranged in a matrix of $10^5$ rows and 1 column, which is referred to as matrix data $a_{50}$.

These matrix data $a_1$, $a_2$, -----, $a_{50}$ are arranged in a set of matrix data A, which is express by the following formula.

$$A = (a_1, a_2, -----, a_{50})$$

The matrix data A become matrix data of $10^5$ rows and 50 columns.

Here, a covariance matrix C is defined by the following formula.

$$C = \tilde{A}A \quad (C \text{ is matrix data of 50 rows and 50 columns})$$

where, $\tilde{A}$ is the transposed matrix of A.

Next, matrix data indicating the first primary component, which is the characteristic vector corresponding to a maximum characteristic value obtained from the characteristic value that satisfies the formula of $Cx - \lambda x$ and a characteristic vector (50 rows and 1 column), are referred to as matrix data $x_1$.

Then, from the formula of $b - Ax_1$, matrix data b ($10^5$ rows and 1 column) are obtained. Figure 7 illustrates each of $10^5$ detection values constituting the matrix data b.

Here, as illustrated in Figure 7, with reference to $10^5$ detection values, a reference signal at which a maximum value of the test sample light Ls is detected for each optical fiber is obtained from the $10^5$ reference signals P(1,000) to P(100, 999) outputted while the scanning light Le is coupled to each of the optical fibers F. For example, for the optical fiber F(1,1), the detection value D(1,006) detected in synchronization with the reference signal P(1,006), i.e., the detection signal Sp(1,1) is a maximum value of the test sample light Ls. For the optical fiber F(100,100), the detection value D(100,995) detected in synchronization with the reference signal P(100,995), i.e., the detection signal Sp(100,100) is a maximum value of the test sample light Ls.

Then, $10^4$ image signals G are obtained by performing the detection in synchronization with the reference signals at which maximum values of the test sample light are detected, i.e., $10^4$ detecting signals Sp (1,1) to Sp(100,100) outputted from the operational state obtaining section 220 according to operational states of the scanning optical system corresponding to the detecting signals Sp(1,1) to Sp(100,100). This may reduce the difference in light intensity of the scanning light passed through the optical fibers when detecting test sample light between each of the optical fibers, which may reduce the difference in light intensity of the scanning light that irradiates each point area of the test sample, so that higher quality image signals may be obtained. Thus, an image, with minimized density irregularities, representing the plane region of the test sample may be displayed.

**Claims**

1. A confocal image obtaining method for obtaining an image signal (G) representing a plane region (5M) constituted by a point area (R) within a test sample (5) by sequentially coupling scanning light (Le) to an end (Ta) of each of a multitude of single optical fibers (F) constituting a fiber bundle (10) and focusing scanning light (Le) outputted from the other end (Tb) of the optical fiber (F) on the point area (R) which is in confocal relation with the other end (Tb) of the optical fiber (F), and inputting test sample light (Ls) emitted from the point area (R) from the other end (Tb) to pass through the optical fiber (F), and detecting in synchronization with a sampling signal (P) sequentially outputted according to an operational state for scanning the scanning light,
**characterized in that** the method comprises the steps of: outputting the sampling signal (P) a plurality of times while the scanning light (Le) is coupled to one of the multitude of single optical fibers and scans on the end (Ta) of the single optical fiber;
obtaining an operational state corresponding to a sampling signal (Sp) at which a maximum value of the test sample light (Ls) is detected among the sampling signals (P) outputted the plurality of times while the scanning light (Le) is coupled to each of the multitude of single optical fibers (F) through statistical processing on multitudes of detection values (D) obtained for each of the multitude of single optical fibers (F) by detecting the test sample light (Ls) in synchronization with the sampling signals (P) when scanning of the scanning light (Le) to each of the multitude of single optical fibers (F) is performed a plurality of times; and
obtaining the image signal (G) by performing the detection under the obtained operational state.

2. The confocal image obtaining method according to claim 1, **characterized in that** the statistical processing is a principal component analysis.

3. A sampling operation state obtaining apparatus for use with the implementation of a confocal image obtaining method for obtaining an image signal (G) representing a plane region (5M) constituted by a point area (R) within a test sample (5) by sequentially coupling scanning light (Le) to an end (Ta) of each of a multitude of single optical fibers (F) constituting a fiber bundle (10) and focusing scanning light (Le) outputted from the other end (Tb) of the optical fiber (F) on the point area (R) which is in confocal relation with the other end (Tb) of the optical fiber (F), and inputting test sample light (Ls) emitted from the point area (R) from the other end (Tb) to pass through the optical fiber (F), and detecting in synchronization with a sampling signal (P) sequentially outputted according to an operational state for scanning the scanning light,

**characterized in that** the apparatus comprises:

a signal output means (210) that is adapted to output the sampling signal (P) a plurality of times while the scanning light (Le) is coupled to one of the multitude of single optical fibers and scans on the end (Ta) of the single optical fiber; and

an operational state obtaining means (220) that is adapted to obtain an operational state corresponding to a sampling signal (Sp) at which a maximum value of the test sample light (Ls) is detected among the,sampling signals (P) outputted the plurality of times while the scanning light (Le) is coupled to each of the multitude of single optical fibers (F) through statistical processing on multitudes of detection values (D) obtained for each of the multitude of single optical fibers (F) by detecting the test sample light (Ls) in synchronization with the sampling signals (F) when scanning of the scanning light (Le) to each of the multitude of single optical fibers (F) is performed a plurality of times.

4.  The sampling operation state obtaining apparatus according to claim 3, **characterized in that** the statistical processing is a principal component analysis.

5.  A confocal image obtaining apparatus comprising a sampling operation state obtaining apparatus according to claim 3; and

a control means (80) for causing the detection to be performed under the obtained operational state.

6.  The confocal image obtaining apparatus according to claim 5, **characterized in that** the statistical processing is a principal component analysis.

**Patentansprüche**

1.  Konfokalbild-Gewinnungsverfahren zum Erhalten eines Bildsignals (G), welches eine durch eine Punktfläche (R) innerhalb einer Testprobe (5) gebildete ebene Zone (5M) repräsentiert, indem Abtastlicht (Le) sequentiell auf ein Ende (Ta) jeder aus einer Vielzahl einzelner Lichtleitfasern (F) eines Faserbündels (10) gekoppelt wird und das von dem anderen Ende (Tb) der Lichtleitfaser (F) ausgegebene Abtastlicht (Le) auf die Punktfläche (R) fokussiert wird, die in konfokaler Beziehung mit dem anderen Ende (Tb) der Lichtleitfaser (F) steht, und Testprobenlicht (Ls), welches von der Punktfläche (R) emittiert wird, über das andere Ende (Tb) eingegeben wird, so dass es durch die Lichtleitfaser (F) läuft, und synchron mit einem Abtastsignal (P) detektiert wird, welches sequentiell abhängig von einem Betriebszustand zum abtastenden Führen des Abtastlichts ausgegeben wird, **dadurch gekennzeichnet, dass** das Verfahren folgende Schritte umfasst:

mehrmaliges Ausgeben des Abtastsignals (P), während das Abtastlicht (Le) auf eine der vielfachen einzelnen Lichtleitfasern gekoppelt wird und das eine Ende (Ta) der einzelnen Lichtleitfaser abtastet;
Ermitteln eines Betriebszustands entsprechend einem Abtastsignal (Sp), bei dem ein Maximalwert des Testprobenlichts (Ls) unter den Abtastsignalen (P), die zu den mehreren Zeiten, zu denen das Abtastlicht (Le) auf jede der vielfachen einzelnen Lichtleitfasern (F) gekoppelt wird, ausgegeben werden, nachgewiesen wird durch statistische Verarbeitung mehrerer Nachweiswerte (D), die für jede der vielfachen einzelnen Lichtleitfasern (F) erhalten werden durch Nachweisen des Testprobenlichts (Ls) synchron mit den Abtastsignalen (P), wenn das Abtastlicht (Le) jedem der vielfachen einzelnen Lichtleitfasern (F) mehrmals zugeführt wird; und
Gewinnen des Bildsignals (G) durch Ausführen des Nachweises in dem ermittelten Betriebszustand.

2.  Verfahren nach Anspruch 1, **dadurch gekennzeichnet, dass** die statistische Verarbeitung eine Hauptkomponentenanalyse ist.

3.  Vorrichtung zum Ermitteln des Abtast-Betriebszustands zur Verwendung bei der Implementierung eines Konfokalbild-Gewinnungsverfahrens zum Erhalten eines Bildsignals (G), welches eine durch eine Punktfläche (R) innerhalb einer Testprobe (5) gebildete ebene Zone (5M) repräsentiert, indem Abtastlicht (Le) sequentiell auf ein Ende (Ta) jeder aus einer Vielzahl einzelner Lichtleitfasern (F) eines Faserbündels (10) gekoppelt wird und das von dem anderen Ende (Tb) der Lichtleitfaser (F) ausgegebene Abtastlicht (Le) auf die Punktfläche (R) fokussiert wird, die in konfokaler Beziehung mit dem anderen Ende (Tb) der Lichtleitfaser (F) steht, und Testprobenlicht (Ls), welches von der Punktfläche (R) emittiert wird, über das andere Ende (Tb) eingegeben wird, so dass es durch die Lichtleitfaser (F) läuft, und synchron mit einem Abtastsignal (P) detektiert wird, welches sequentiell abhängig von einem Betriebszustand zum abtastenden Führen des Abtastlichts ausgegeben wird, **dadurch gekennzeichnet, dass** die Vorrichtung aufweist:

eine Signalausgabeeinrichtung (210), ausgebildet zum mehrmaligen Ausgeben des Abtastsignals (P), während das Abtastlicht (Le) auf eine der vielfachen einzelnen Lichtleitfasern gekoppelt wird und auf das eine Ende (Ta) der einzelnen Lichtleitfaser fällt; und
eine Betriebszustand-Gewinnungseinrichtung (220), ausgebildet zum Gewinnen eines Betriebszustands entsprechend einem Abtastsignal (Sp), bei dem ein Maximalwert des Testprobenlichts (Ls) unter den Abtastsignalen (P), die zu den mehreren Zeiten, zu denen das Abtastlicht (Le) auf jede der vielfachen einzelnen Lichtleitfasern (F) gekoppelt wird, ausgegeben werden, nachgewiesen wird durch statistische Verarbeitung mehrerer Nachweiswerte (D), die für jede der vielfachen einzelnen Lichtleitfasern (F) erhalten werden durch Nachweisen des Testprobenlichts (Ls) synchron mit den Abtastsignalen (P), wenn das Abtastlicht (Le) jedem der vielfachen einzelnen Lichtleitfasern (F) mehrmals zugeführt wird.

**4.** Vorrichtung nach Anspruch 3, **dadurch gekennzeichnet, dass** die statistische Verarbeitung eine Hauptkomponentenanalyse ist.

**5.** Konfokalbild-Gewinnungsvorrichtung, umfassend eine Vorrichtung nach Anspruch 3; und
eine Steuereinrichtung (80) zum Veranlassen, dass der Nachweis in dem gewonnenen Betriebszustand durchgeführt wird.

**6.** Vorrichtung nach Anspruch 5, **dadurch gekennzeichnet, dass** die statistische Verarbeitung eine Hauptkomponentenanalyse ist.

**Revendications**

**1.** Procédé d'obtention d'une image confocale afin d'obtenir un signal d'image (G) représentant une région plane (5M) constituée par une zone de point (R) à l'intérieur d'un échantillon test (5) en couplant séquentiellement une lumière de balayage (Le) à une extrémité (Ta) de chacune d'une multitude de fibres optiques uniques (F) constituant un faisceau de fibres (10) et en concentrant la lumière de balayage (Le) délivrée depuis l'autre extrémité (Tb) de la fibre optique (F) sur la zone de point (R) qui se trouve en relation confocale avec l'autre extrémité (Tb) de la fibre optique (F), et en faisant entrer une lumière d'échantillonnage test (Ls) émise depuis la zone de point (R) depuis l'autre extrémité (Tb) afin de traverser la fibre optique (F), et en détectant en synchronisation avec un signal d'échantillonnage (P) séquentiellement délivré conformément à un état opérationnel pour balayer la lumière de balayage, **caractérisé en ce que** le procédé comporte les étapes consistant à :

délivrer le signal d'échantillonnage (P) plusieurs fois tandis que la lumière de balayage (Le) est couplée à l'une de la multitude de fibres optiques uniques et balaie l'extrémité (Ta) de la fibre optique unique ;
obtenir un état opérationnel correspondant à un signal d'échantillonnage (Sp) auquel une valeur maximum de la lumière d'échantillonnage test (Ls) est détectée parmi les signaux d'échantillonnage (P) délivrés plusieurs fois tandis que la lumière de balayage (Le) est couplée à chacune de la multitude de fibres optiques uniques (F) par l'intermédiaire d'un traitement statistique sur des multitudes de valeurs de détection (D) obtenues pour chacune de la multitude de fibres optiques uniques (F) en détectant la lumière d'échantillonnage test (Ls) en synchronisation avec les signaux d'échantillonnage (P) lorsqu'un balayage de la lumière de balayage (Le) sur chacune de la multitude de fibres optiques uniques (F) est effectué plusieurs fois ; et
obtenir le signal d'image (G) en effectuant la détection dans l'état opérationnel obtenu.

**2.** Procédé d'obtention d'une image confocale selon la revendication 1, **caractérisé en ce que** le traitement statistique est une analyse des composantes principales.

**3.** Appareil d'obtention d'un état d'opération d'échantillonnage utilisé avec l'implémentation d'un procédé d'obtention d'une image confocale afin d'obtenir un signal d'image (G) représentant une région plane (5M) constituée par une zone de point (R) à l'intérieur d'un échantillon test (5) en couplant séquentiellement une lumière de balayage (Le) à une extrémité (Ta) de chacune d'une multitude de fibres optiques uniques (F) constituant un faisceau de fibres (10) et en concentrant la lumière de balayage (Le) délivrée depuis l'autre extrémité (Tb) de la fibre optique (F) sur la zone de point (R) qui se trouve en relation confocale avec l'autre extrémité (Tb) de la fibre optique (F), et en faisant entrer la lumière d'échantillonnage test (Ls) émise depuis la zone de point (R) depuis l'autre extrémité (Tb) afin de traverser la fibre optique (F), et en détectant en synchronisation avec un signal d'échantillonnage (P) délivré séquentiellement conformément à un état opérationnel pour balayer la lumière de balayage,
**caractérisé en ce que** l'appareil comporte :

un moyen de sortie de signal (210) qui est adapté pour délivrer le signal d'échantillonnage (P) plusieurs fois tandis que la lumière de balayage (Le) est couplée à l'une de la multitude de fibres optiques uniques et balaie l'extrémité (Ta) de la fibre optique unique ; et
un moyen d'obtention d'état opérationnel (220) qui est adapté pour obtenir un état opérationnel correspondant à un signal d'échantillonnage (Sp) auquel une valeur maximum de la lumière d'échantillonnage test (Ls) est détectée parmi les signaux d'échantillonnage (P) délivrés plusieurs fois tandis que la lumière de balayage (Le) est couplée à chacune de la multitude de fibres optiques uniques (F) par l'intermédiaire d'un traitement statistique sur des multitudes de valeurs de détection (D) obtenues pour chacune de la multitude de fibres optiques uniques (F) en détectant la lumière d'échantillonnage test (Ls) en synchronisation avec les signaux d'échantillonnage (P) lorsqu'un balayage de la lumière de balayage (Le) sur chacune de la multitude de fibres optiques uniques (F) est effectué plusieurs fois.

4. Appareil d'obtention d'un état d'opération d'échantillonnage selon la revendication 3, **caractérisé en ce que** le traitement statistique est une analyse des composantes principales.

5. Appareil d'obtention d'une image confocale comprenant un appareil d'obtention d'état d'opération d'échantillonnage selon la revendication 3 ; et
un moyen de contrôle (80) pour amener la détection à être effectuée dans l'état opérationnel obtenu.

6. Appareil d'obtention d'une image confocale selon la revendication 5, **caractérisé en ce que** le traitement statistique est une analyse des composantes principales.

**FIG.1**

# FIG.2

# FIG.3

**10**

First Scanning

X →

P1(1,001)          P1(1,010) P1(1,011)          P1(1,020)

P1(1,000)    Le    P1(1,009)          Le    P1(1,019)

Ta(1,1)          Ta(1,2)

C          F(1,1)          C          F(1,2)          C

**10**

Second Scanning

X →

P2(1,012)

P2(1,002)    P2(1,011)          P2(1,021)

P2(1,001)    Le    P2(1,010)          Le    P2(1,020)

P2(1,000)    Ta(1,1)          Ta(1,2)

P2(1,006)          P2(1,017)

P2(1,013)

C          F(1,1)          C          F(1,2)          C

# FIG.4

First
Scanning

Second
Scanning

# FIG.5

| Number of Times of Scanning | Detection Value | | | | | | | |
|---|---|---|---|---|---|---|---|---|
| First Scanning | D1(1,000) | D1(1,001) | • • • • • • • | D1(1,006) | • • • • • • • | D1(1,011) | • • • |
| Second Scanning | D2(1,000) | D2(1,001) | • • • • • • • | D2(1,006) | • • • • • • • | D2(1,011) | • • • |
| ⋮ | ⋮ | ⋮ | • • • • • • • | ⋮ | • • • • • • • | ⋮ | • • • |
| 50th Scanning | D50(1,000) | D50(1,001) | • • • • • • • | D50(1,006) | • • • • • • • | D50(1,011) | • • • |
| Total Value | Dt(1,000) =1 | Dt(1,001) =20 | • • • • • • • | Dt(1,006) =140 | • • • • • • • | Dt(1,011) =2 | • • • |

EP 1 855 139 B1

FIG.6A

FIG.6B

# FIG.7

Each Value Forming Matrix Data a1

D(1,006)

Detection
Value

D(100,995)

D(1,000)

D(100,999)

P(1,000)    P(1,010)

P(1,006)→Sp(1,1)

P(100,990)  P(100,999)

P(100,995)→Sp(100,100)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005275125 A
- JP 10311949 A
- EP 1580586 A